# EUROPEAN PATENT APPLICATION

(11) **EP 2 141 950 A1**
(43) Date of publication of application: **06.01.2010**
(21) Application number: 08305358.7
(22) Date of filing: 30.06.2008
(51) Int. Cl.: H04W 28/26

(54) **Method and apparatus for improving top performance of asymmetric communication system**

(71) Applicant: Thomson Licensing, Inc., 92100 Boulogne-Billancourt (FR)
(72) Inventor: Cheng, Linxiang, 100085, BEIJING (CN); Zhang, Zhigang, 100085, BEIJING (CN); Wang Xianlei, 100085, BEIJING (CN)
(74) Representative: Ruellan-Lemonnier, Brigitte

(57) **Abstract**

A method and apparatus for improving TCP performance of an asymmetric communication system are provided. The asymmetric communication system comprising an access point (AP) and at least one associated station (STA1, STA2) which access a common medium with respective time slots allocated by the access point, and a downlink transmission from the access point (AP) to the stations (STA1, STA2) having a higher data rate than an uplink transmission from each station to the access point (AP). The method comprises the steps of, at the level of the station (STA1): upon detection of the real time traffic of the uplink transmission reaching a threshold value , transmitting a message to the access point requesting the access point (AP) to allocate system reserved time slots for the transmission of acknowledgement packets for downlink packets; and upon reception of an message from the access point (AP) allocating the system reserved time slots, transmitting acknowledgement packets for downlink packets with the system reserved time slots. (Fig. 2)

## Description

### FIELD OF THE INVENTION

The present invention relates generally to the field of communication, and more particularly, to a method and apparatus for improving TCP (Transmission Control Protocol) performance of an asymmetric communication system.

### BACKGROUND OF THE INVENTION

In a symmetric network, all devices can transmit and receive data at equal rates. On the other hand, asymmetric networks support disproportionately more bandwidth in one direction than the other.

For the asymmetric network, an asymmetric bandwidth link may suffer severe performance degradation, especially during a bidirectional transmission. Specifically, in a TCP data transmission of an asymmetric network having a first-link and a second-link with the data rate of the first-link higher than that of the second -link, the actual data rate of the first-link will drop down to a level of the data rate of the second-link during a bidirectional transmission due to the occurrence of an ACK-clocking (Acknowledgement-clocking) which means ACK transmission for first-link data is delayed by the second-link data transmission.

Therefore, in order to support bidirectional TCP transmission in the asymmetric network, solutions are needed to prevent a higher data rate of one link from decreasing due to a lower data rate of the other link.

### SUMMARY OF THE INVENTION

An object of the invention is to provide a method and apparatus for improving a bi-directional TCP performance of an asymmetric communication system.

According to one aspect of the invention, a method for improving TCP performance of an asymmetric communication system is provided. The asymmetric communication system comprising an access point and at least one associated station which access a common medium with respective time slots allocated by the access point, and a downlink transmission from the access point to the stations has a higher data rate than an uplink transmission from each station to the access point. The method comprises the steps of, at the level of the station: upon detection of the real time traffic of the uplink transmission reaching a threshold value, transmitting a message to the access point requesting the access point to allocate system reserved time slots for the transmission of acknowledgement packets for downlink packets; and upon reception of an message from the access point allocating the system reserved time slots, transmitting acknowledgement packets for the downlink packets with the system reserved time slots.

According to another aspect of the invention, a method for improving TCP performance of an asymmetric communication system is provided. The asymmetric communication system comprising an access point and at least one associated station which access a common medium with respective time slots allocated by the access point, and a downlink transmission from the access point to the stations has a higher data rate than an uplink transmission from each station to the access point. The method comprises the steps of, at the level of the access point: upon reception of an message transmitted from a first station among the associated stations requiring to use system reserved time slots for the transmission of acknowledgement packets for downlink packets, detecting whether there are system reserved time slots remain unoccupied; and upon detection of unoccupied system reserved time slots, transmitting a message to the first station to allocate the system reserved time slots to the first station.

According to another aspect of the invention, an apparatus in a communication system is provided. The apparatus receives first-link data packets through a high data rate channel and transmits acknowledgement packets for the first-link data packets and second-link data packets through a low data rate channel within time slots allocated by the communication system. The apparatus comprises means for requesting the communication system to open system reserved time slots to transmit the acknowledgement packets for the first link data packets upon the real time traffic of the lower speed channel reaching a threshold value.

According to another aspect of the invention, an apparatus in a communication system is provided. The apparatus transmits first-link data packets to a terminal through a high data rate channel and receives acknowledgement packets for the first-link data packets and second-link data packets transmitted from the terminal through a low data rate channel within time slots allocated by the apparatus. The apparatus comprises means for deciding whether to allocate system reserved time slots to the terminal for transmitting the acknowledgement packets for the first-link data packets based on the availability of the system reserved time slots.

### BRIEF DESCRIPTION OF DRAWINGS

These and other aspects, features and advantages of the present invention will become apparent from the following description in connection with the accompanying drawings in which:
Figure 1 is an exemplary diagram showing the network topology of an ADoC system;
Figure 2 is a flow chart showing a method for improving TCP performance of a TDF ADoC network according to an embodiment of the present invention;
Figure 3 is a flow chart showing a process of opening a fast path by ADoC AP and STA according to an embodiment of the present invention;
Figure 4 is a flow chart showing a process for closing a fast path by ADoC AP and STA according to the embodiment of the present invention;
Figure 5 shows an example of the format of a request frame for opening a fast path;
Figure 6 shows an example of the format of a response frame for opening a fast path;
Figure 7 shows an example of the format of a request frame for closing a fast path; and
Figure 8 shows an example of the format of a response frame for closing a fast path.

### DETAIL DESCRIPTION OF PREFERRED EMBODIMENTS

In the following description, various aspects of an embodiment of the present invention will be described. For purposes of explanation, specific configurations and details are set forth in order to provide a thorough understanding. However, it will also be apparent to one skilled in the art that the present invention may be practiced without the specific details present herein.

To provide a cost-effective bi-directional data transmission solution over the existing coaxial cable access network, a method has been proposed, which utilizes mature commodity WiFi chipsets with external frequency conversion circuit for frames delivery. The system which employs this method is referred to as ADoC (Asymmetric Data over Coaxial Cable) system, in which a TDF (Time Division Function) protocol is deployed to allow ADoC access point and stations to access the coaxial cable medium in a time-sharing mode, instead of a contention-based mode. In this way, the user at home can access the remote IP core network via the cable access network.

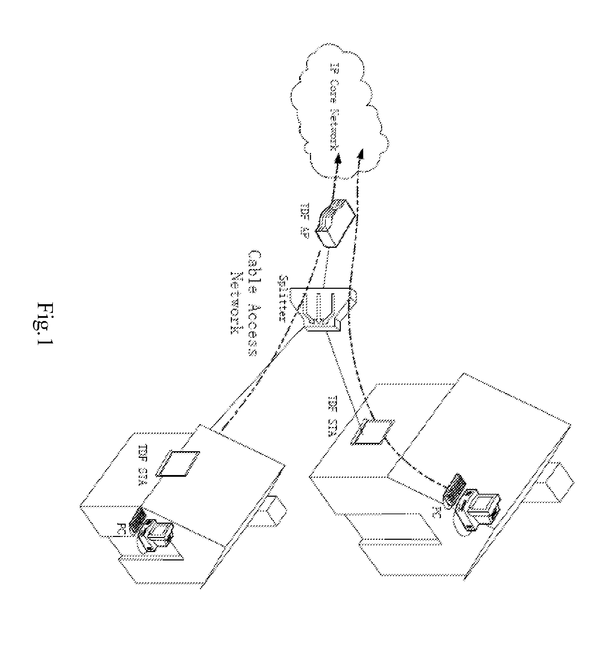

The detailed network topology is illustrated in Figure 1. As shown in Figure 1, in this typical access network infrastructure, a TDF protocol compliant access point (AP) has one Ethernet Interface (not shown) in connection with the IP core network, and one coaxial cable interface (not shown) in connection with the cable access network. On the other end of the cable access network, there are TDF protocol compliant stations (STA), i.e. terminals, which connect with the cable access network via the coaxial cable interface and connect with the home LAN (Local Area Network) via the Ethernet interface. In the ADoC network, the AP and its associated STAs access the coaxial cable with TDMA (Time Division Multiple Access) method to transmit frames over the coaxial cable media. The SATs transmit for uplink traffic, one after another, each using their own time slot in a TDF supper frame assigned by the AP. And for the download traffic, the STAs share the channels and select the data or management frames by comparing the destination address information in the frames with their addresses.

Because ADoC is an asymmetric network system, the uplink (from STAs to AP) and the downlink (from AP to STAs) may be different in data rate. Generally, the data rate of the uplink is much lower than th at of the downlink. Therefore, TCP data transmission of the ADoC network will suffer severe performance degradation due to the reason as described above in the background information.

Specifically, during a bidirectional transmission, the AP of the ADoC network continuously transmits downlink packets to associated STAs without ACKs within a predetermined window and timeout (its own time slot), and then waits for ACKs for the downlink packets from the STAs. However, the STAs of the ADoC network will delay the transmission of the ACKs for the downlink packets in order to preferentially transmit uplink packets. As a result, the packets for uplink transmission are filled in a transmission buffer of the subscriber node, preventing the ACKs for the downlink packets from being transmitted in time. This causes the data rate of the downlink to drop down to a level of the data rate of the uplink.

In view of the above problem, according to one embodiment of the present invention, a method and apparatus for improving TCP performance of an TDF ADoC system is provided to ensure the downlink data rate not be influenced by the uplink data rate, and at the same time, without reducing the uplink data rate.

In TDF ADoC network system, several contest time slots are reserved by the system for STAs associat ed with the AP . The present embodiment proposes to use these system reserved time slots to transmit the ACKs for the downlink packets by a STA when the uplink traffic of the STA reaches a threshold value thereby can not transmit the ACKs for the downlink packets in time. That is, under a condition that the uplink traffic of the STA is too large to allow the STA to carry out an effective transmission of the ACKs for the downlink packets, a fast and additional path is opened for the STA to transmit the ACKs for downlink packets, by which the downlink data rate can be ensured and also the uplink data rate is not reduced.

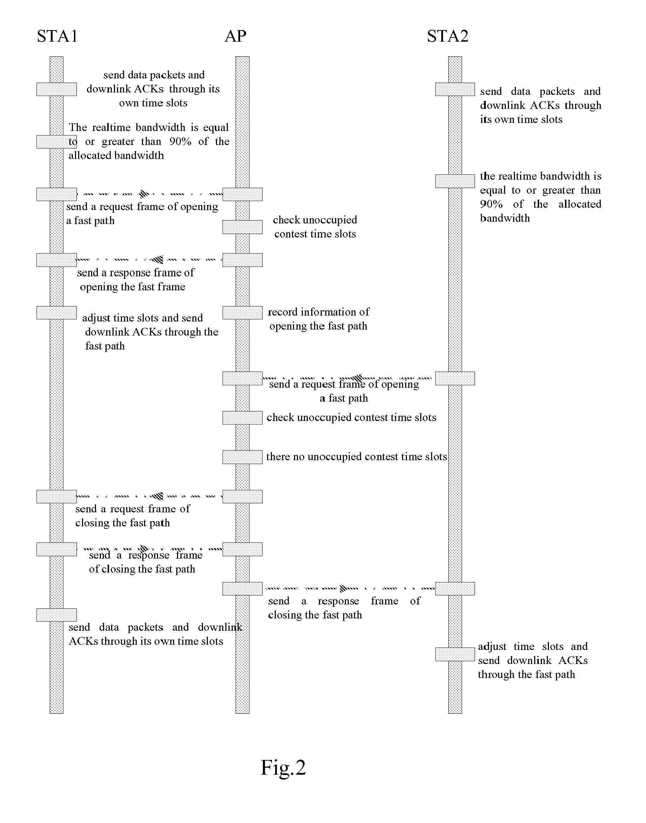

Figure 2 is a flow chart showing a method for improving TCP performance of a TDF ADoC network system according to an embodiment of the present invention. The present embodiment will be described in more detail with reference to the Figure 2.

In the ADoC network system shown in Figure 2, an ADoC AP and two STAs (STA1 and STA2) access the coaxial cable in a time-sharing mode. The STA1 and STA2 transmit for uplink traffic, one after another, using respective time slots in a TDF supper frame allocated by the AP. And for the download traffic, the STA1 and STA2 share the channels and select the data or management frames transmitted by the AP by comparing the destination address information in the frames with their addresses.

As shown in Figure 2, in the uplink transmission of STA1, the STA1 transmits data packets and ACKs for downlink packets to the AP with its own time slots allocated by the AP. After the STA1 starts the uplink transmission, it will detect in real time its bandwidth. Upon detection by the STA1 that its real time bandwidth is equal to or greater than a threshold, in this embodiment 90% of its allocated bandwidth for example, the STA1 will send a request frame to the AP requesting the AP to allocate contest time slots reserved by the ADoC system to it. That is, the STA1 asks the AP to open a fast path for transmission of the ACKs for downlink packets.

Upon reception by the AP of the request frame from the STA1, the AP will check whether there are unoccupied contest time slots in the system. As shown in the Figure 2, because the system still has unoccupied time slots, the AP transmits a response frame to the STA1 to inform the STA1 the system time slots (the fast path) that was allocated to it. Although not shown in Figure 2, the response frame from the AP may comprise the starting time and count of the allocated system reserved time slots.

At the same time, the AP can record the time slot allocation information.

Upon reception by the STA1 of the response frame from the AP, the STA1 will adjust its time slots according to the information in the response frame and use the newly allocated time slots for transmitting the ACKs for downlink packets.

Referring to Figure 2, the STA2 which is associated with the AP will also detect in real time its bandwidth after it initiates the uplink transmission. Upon detection of its real time bandwidth being equal to or greater than a threshold value , in this embodiment 90% of its allocated bandwidth for example, the STA2 will send a request frame to the AP for opening a fast path for it.

Similarly, the AP will check whether there are unoccupied contest time slots in the system, for example, by referring to its recorded allocation information. If the system still have unoccupied contest time slots, the AP will allocate these slots to the STA2 for transmission of the ACKs for downlink packets.

In this embodiment, as shown in Figure 2, because all the system reserved time slots are allocated to the STA1, the AP detects that all contest time slots are occupied (allocated to STA1).

Next, the AP sends a request frame to the STA1, informing the STA1 to close the fast path.

Upon reception by the STA1 of the request frame from the AP, it will immediately free the occupied contest time slots and start to transmit uplink data packets and ACKs for downlink packets with its own time slot initially assigned by the AP. At the same time, the STA1 transmits a response frame to the AP informing the closing of the fast path.

Upon reception by AP of the response frame from the STA1, it will transmit a response frame to the STA2 to inform the STA2 the time slots that were allocated to it. Then the STA2 will adjust its time slots and use the newly allocated time slots for transmitting the ACKs for the downlink packets.

According to the present embodiments, a fast path is opened for the STA1 and/or STA2 to transmit ACKs for their downlink packets. Therefore, the downlink data rate will not drop down to a level of the uplink data rate due to the delay of ACKs for downlink packets. Then the bidirectional TCP performance of the ADoC network is improved.

Although the present embodiment is described based on an ADoC network with only one AP and two STAs for illustrative purpose, a person skilled in the art can easily understand that principles of the present embodiment are applicable in network with multiple APs and STAs.

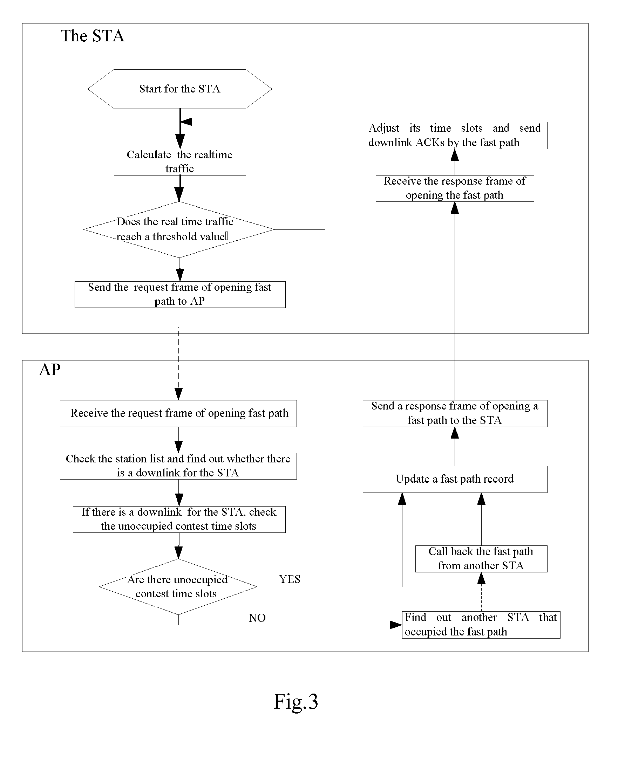

Figure 3 is a flow chart showing a process of opening a fast path by ADoC AP and STA according to an embodiment of the present invention.

After the STA is associated with the AP, it will detect in real time the uplink traffic (real time bandwidth). Upon detection of the real time uplink traffic overrunning a threshold, the STA will send a request frame to the AP for opening a fast path. And upon reception of a response frame from the AP to open the fast path, the STA will adjust its time slots according to the response frame to use the fast path to transmit ACKs for downlink packets.

For the AP, upon reception of the request frame from the STA, it will check the station list and find out whether there is a downlink traffic for the STA. If there is a downlink traffic for this STA, the AP will further check whether the system has unoccupied time slots. If the result is yes, the AP will allocate an amount of time slots to the STA and update the record for the fast path allocation. If the result if no, the AP will find out from the record if there are any other STAs that should release the fast path and then send a request frame to one or more of these STAs to call back the fast path. Upon reception by the AP of the response frame from these STAs, it will send a response frame to the requesting STA to open a fast path to it and at the same time update the record.

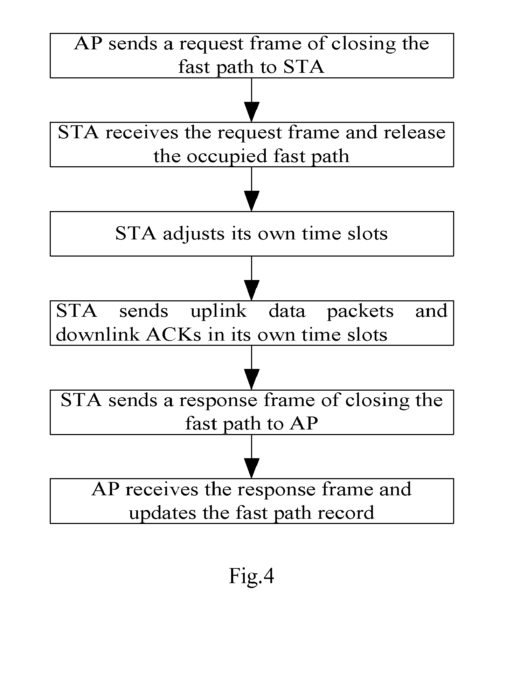

Figure 4 is a flow chart showing a process for closing a fast path by ADoC AP and STA according to the embodiment of the present invention.

As shown in Figure 4, upon reception of the request frame of closing the fast path transmitted from the AP, the STA will release immediately the occupied fast path and adjust its time slots to send uplink data packets and ACKs for downlink packets by its own time slots. Then, the STA will send a response frame to the AP informing the closing of the fast path, and then the AP will update its record and process the fast path as described in Figure 3.

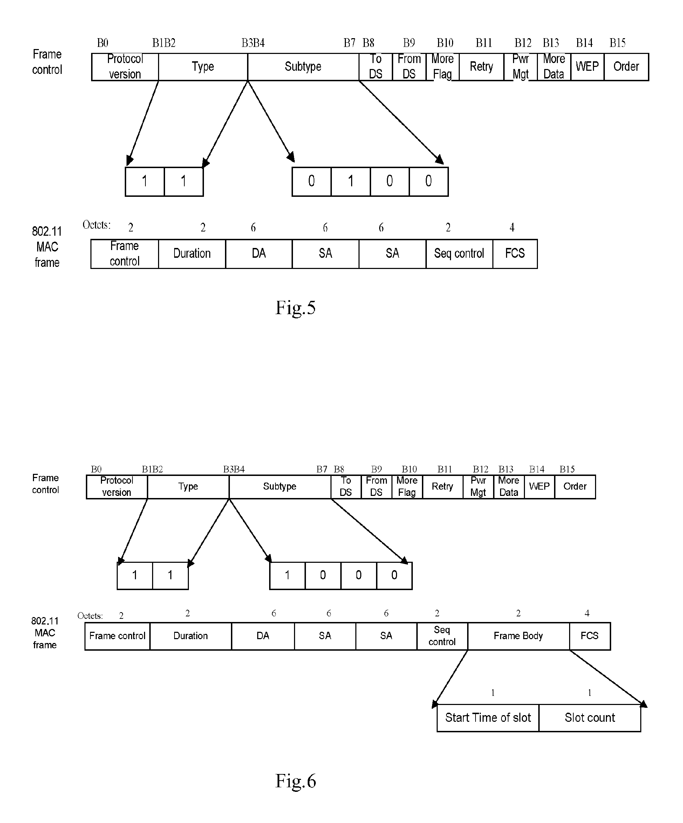

In order to implement the present embodiment, the 802.11 frame format is extended to include two new frame types and four new frame subtypes describing the request of opening fast path, the response of opening fast path, the request of closing fast path and response of closing fast path. Examples of the new frame format types and subtypes are shown in Figures 5-8.
Figure 5 shows an example of a frame format for opening a fast path. As shown in Figure 5, the Type subfield of the frame control is set to 11 to indicate a new management frame and Subtype subfield is set to 0100 to indicate a Request frame format of opening fast path.
Figure 6 shows an example of the format of a response frame for opening a fast path. As shown in Figure 6, the Type subfield of frame control is set to 11 to indicate a new management frame and the Subtype subfield is set to 1000 to indicate a Response frame format of opening fast path. In the frame body, 2 bytes are defined in which one byte is for the start time of time slot, the other is for slot count.

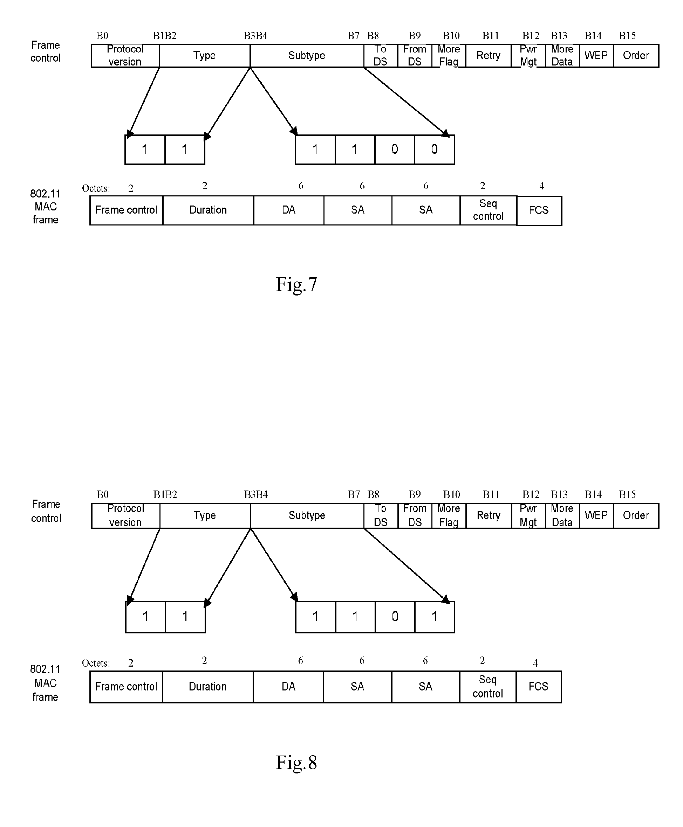

Figure 7 shows an example of the format of a request frame for closing a fast path. As shown in Figure 7, the Type subfield of the frame control is set to 11 to indicate a new management frame and Subtype subfield is set to 1100 to indicate a Request frame format of opening fast path.
Figure 8 shows an example of the format of a response frame for closing a fast path. As shown in Figure 8, the Type subfield of the frame control is set to 11 to indicate a new management frame and Subtype subfield is set to 1101 to indicate a Request frame format of opening fast path.

The above frame s also comprise other fields defined by the 802.11 specification. The other parts of the frame are not described because they are not crucial in the context of the present embodiment.

Although specific frame formats are shown and described, it is obvious for those skilled in the art that many other formats are also possible for implementing the solution under the principle of the present invention.

While the embodiments are presented in the context of the ADoC network system with TDF, those skilled in the art will recognize that the principles of the invention are applicable to other asymmetric communication systems. It is to be understood that numerous modifications may be made to the illustrative embodiments and that other arrangements may be devised without departing from the spirit and scope of the present invention as defined by the appended claims.

## Claims

1. A method for improving TCP performance of an asymmetric communication system, the asymmetric communication system comprising an access point (AP) and at least one associated station (STA1, STA2) which access a common medium with respective time slots allocated by the access point, and a downlink transmission from the access point (AP) to the stations (STA1, STA2) having a higher data rate than an uplink transmission from each station to the access point (AP),
**characterized in that** the method comprises the steps of, at the level of the station (STA1):
upon detection of the real time traffic of the uplink transmission reaching a threshold value , transmitting a message to the access point requesting the access point (AP) to allocate system reserved time slots for the transmission of acknowledgement packets for downlink packets; and
upon reception of an message from the access point (AP) allocating the system reserved time slots, transmitting acknowledgement packets for downlink packets with the system reserved time slots.

2. The method according to claim 1, wherein the threshold value is a predetermined percentage of the transmission capacity according to the initially allocated time slots of the station (STA1).

3. The method according to claim 1, wherein the threshold value is a predetermined percentage of the bandwidth according to the initially allocated time slots of the station (STA1).

4. The method according to one of claims 1 to 3, wherein the station (STA1) frees the occupied system reserved time slots upon reception a message from the access point (AP) requiring to call back the system reserved time slots and sends a response to the access point (AP).

5. A method for improving TCP performance of an asymmetric communication system, the asymmetric communication system comprising an access point (AP) and at least one associated station (STA1, STA2) which access a common medium with respective time slots allocated by the access point, and a downlink transmission from the access point (AP) to the stations (STA1, STA2) having a higher data rate than an uplink transmission from each station to the access point (AP),
**characterized in that** the method comprises the steps of, at the level of the access point (AP):
upon reception of an message transmitted from a first station (STA1) among the stations requiring to use system reserved time slots for the transmission of acknowledgement packets for downlink packets, detecting whether there are system reserved time slots remain unoccupied; and
upon detection of unoccupied system reserved time slots, transmitting a message to the first station (STA1) to allocate the system reserved time slots to the first station (STA1).

6. The method according to claim 5, wherein the message from the access point (AP) comprises the starting time and amount of the allocated system reserved time slots.

7. The method according to claim 6, wherein the access point (AP) records information of the system reserved time slots allocation.

8. The method according to claim 7, wherein the access point (AP) detects whether there are system reserved time slots remain unoccupied according to the recorded information.

9. The method according to one of claim 5 or 6, wherein
upon reception of an message transmitted from a second station (STA2) among the stations requiring to use system reserved time slots and upon detection of all system reserved time slots being occupied, the access point transmit a message to the first station (STA1) which occupied the system reserved time slots requesting to call back the system reserved time slots; and
upon reception a response from the first station (STA1) of releasing the system reserved time slots, transmitting a message to the second station (STA2) to allocate the system reserved time slots to the second station (STA2).

10. The method according to one of claims 1 to 9, wherein the asymmetric communication system is a coaxial cable data access network.

11. An apparatus in a communication system, the apparatus receiving first-link data packets through a high data rate channel and transmitting acknowledgement packets for the first-link data packets and second-link data packets through a low data rate channel within time slots allocated by the communication system,
**characterized in that** the apparatus comprises:
means for requesting the communication system to open system reserved time slots to transmit the acknowledgement packets for the first link data packets upon the real time traffic of the lower speed channel reaching a threshold value.

12. An apparatus in a communication system, the apparatus transmitting first-link data packets to a terminal through a high data rate channel and receiving acknowledgement packets for the first-link data packets and second-link data packets transmitted from the terminal through a low data rate channel within time slots allocated by the apparatus,
**characterized in that** the apparatus comprises:
means for deciding whether to allocate system reserved time slots to the terminal for transmitting the acknowledgement packets for the first-link data packets based on the availability of the system reserved time slots.
